# EUROPEAN PATENT APPLICATION

(11) **EP 0 969 272 A1**
(43) Date of publication of application: **05.01.2000**
(21) Application number: 98112333.4
(22) Date of filing: 03.07.1998
(51) Int. Cl.: G01G 19/415, G01F 23/00, G08C 25/02

(54) **Radio controlled storage and container**

(71) Applicant: Bossard AG, 6305 Zug (CH)
(72) Inventor: Grob, Beat, 6005 Luzern (CH); La Count, Mark, 9642 Ebnat Kappel (CH); Muncy Henderson, Iving D., 6312 Steinhausen (CH)
(74) Representative: Blum, Rudolf Emil Ernst

(57) **Abstract**

A storage system comprises a plurality of containers (1), each of which is equipped with a weight sensor (6), a control unit (8) and a radio transmitter (9). The radio transmitter (9) is used for transmitting a signal indicative of the amount of material (7) stored in the container (1). A central radio receiver of the storage system collects the signals from the containers (1), which allows an automatic, centralised detection of the need for replenishing containers.

## Description

The invention relates to a storage with a plurality of containers and to a container suited for being used in such a storage according to the preamble of the independent claims.

A system of this type can be used for storing small articles, such as screws, nuts, bolts, electrical components, fasteners or pills, but also for storing different liquids. Usually, each container of the storage holds one type of article or liquid. During normal operation the containers are slowly being emptied. For instance, screws and nuts are being removed from the bins of the storage for assembling devices in a factory. As soon as a container is empty, it has to be refilled, e.g. by replenishing it from a central store or by reordering articles from an external supplier.

Monitoring the containers for the need of replenishing is a time consuming and costly task. If it is not carried out with care, an empty container may e.g. interrupt the operation of a whole assembly line. Depending on the rate of inspection of the containers, a large inventory of articles may have to be stored on-site to avoid shortages.

Hence, the problem to be solved by the present invention is to provide a storage and container of the type mentioned above that allows a secure and timely but economical replenishing of the containers.

This problem is solved by the storage and container of the independent claims.

Each container of the storage comprises a contents detector for measuring a parameter depending on the amount of material stored in it. This parameter can e.g. be the weight of the stored material, a filling level, or merely a Boolean value indicative if the amount of material is below a given threshold value. Furthermore, each container comprises a radio transmitter for emitting a signal indicative of said parameter.

This design allows to monitor the containers from a remote site, such as a central computer. The containers can be moved around individually as each of them is equipped with its own detector and transmitter.

The storage can be provided with means for localising individual transmitters, e.g. a triangulation system or mobile direction-sensitive receivers.

For distinguishing the signals from the containers, an identifier can be attributed to each container, which identifier is emitted together with the radio signal by the containers' transmitters.

In order to reduce the energy consumption of the individual containers, the signals are preferably not emitted continuously but in regular or irregular intervals and/or upon special events. For example, a signal can be emitted when the weight of the contents of the container has changed or when it falls below a predefined threshold value.

Further preferred embodiments, advantages and applications of the invention are given in the dependent claims as well as in the following description, which refers to the enclosed figures, wherein:
Fig. 1 is a schematic representation of an embodiment of a storage according to the present invention,
Fig. 2 is an embodiment of a single container according to the present invention, and
Fig. 3 is a block diagram of the electronics of the container of Fig. 2.

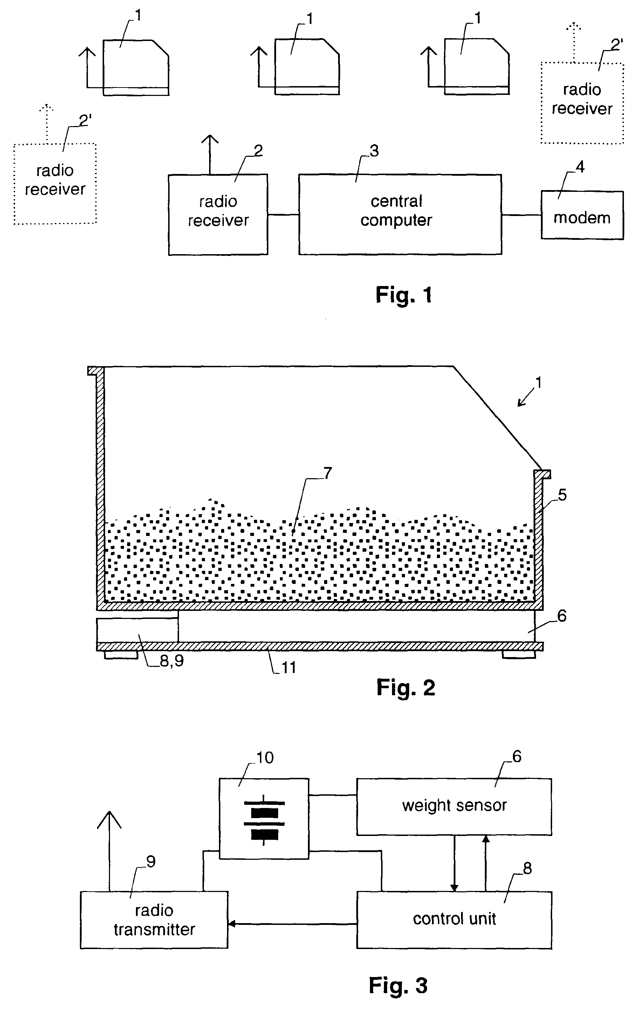

A possible embodiment of a storage is shown in Fig. 1. It comprises a plurality of containers 1. Typically, each of these containers is mobile and can e.g. be carried around by workers in a production line. The containers are filled with various goods, such as screws, nuts, etc. Each container is equipped with a weight sensor and a radio transmitter, as it will be described in more detail below. The weight sensor e.g. measures the weight of the material stored in the container, the radio receiver emits a signal indicative of this weight, as well as an identifier attributed to the container.

The signals from the containers are received by a radio receiver 2, which is connected to a central computer 3 for processing the received signals. Using the received data, central computer 3 can e.g. generate a list of the containers that need replenishing and the goods that have to be ordered from a remote supplier. Central computer 3 can be connected to a modem 4 that allows it to order missing goods from the supplier automatically.

In a preferred embodiment, the storage can be equipped with a system for determining the position of individual containers 1. Preferably, the radio signals emitted by the containers are used for this purpose, e.g. by providing a plurality of additional radio receivers 2' for a triangulation of the signals. Alternatively, directionally sensitive mobile radio receivers can be used, or the containers can be equipped with location detectors and embed their coordinates in their radio signals.

A preferred embodiment of a container 1 and a block diagram of its electrical components are shown in Figs. 2 and 3. The container 1 comprises a bin 5. Bin 5 can e.g. be of conventional design with for side walls and a button wall while being open at the top. Bin 5 rests on a weight sensor 6 that measures the weight of bin 5 and the material 7 within it. Container 1 further comprises a control unit 8 and a radio transmitter 9, as well as a power supply 10. All these components are mounted to a support plate 11 and attached to the container.

Control unit 8 operates weight sensor 6, reads the signals generated by it, and actuates radio transmitter 9 for transmitting radio signals.

In order to save battery power as well as transmission bandwidth, radio transmitter 9 is not operated continuously but intermittently. This can e.g. be carried out by using one or a combination of the following algorithms:
a) Weight sensor 6 is operated in regular intervals and the measured weight is immediately transmitted by radio transmitter 9.
b) Weight sensor 6 is operated in regular intervals but a transmission only takes place if the weight has changed since a last transmission.
c) Weight sensor 6 is operated in regular intervals but a transmission only takes place if the weight has fallen below a given threshold value.
d) If container 1 is further equipped with a radio receiver, measurements can be carried out upon request of central computer 3.

An identifier is attributed to each container 1. This identifier is sent out together with each transmission for allowing receiver 2 or central computer 3 to distinguish the source of the received signals. The identifier is preferably unique for each container 1 or at least unique for each type of material stored in the containers 1. The identifier can also be expressed as a unique transmission frequency for each container.

In addition to signals indicative of the amount of material stored in the container 1, radio transmitter 9 can be used for transmitting other type of data, such as position signals (if the container is equipped with means for determining its position) or service calls (e.g. a "battery low" signal).

The signals emitted by the radio transmitter are preferably digitally coded. For keeping the circuitry of the containers 1 simple, other types of coding can be used as well. If a capacitive weight sensor is used and operated in an oscillator, the oscillator signal can e.g. be transmitted directly and all required decoding can take place in central computer 3.

In the embodiment of Figs. 2 and 3, a weight sensor is used for determining the amount of material 7 in container 1. Alternatively, other types of "contents detectors" can be used, such as optical detectors, light barriers, acoustic detectors, etc. Each of these detectors can be used for measuring a parameter depending on the amount of material 7, such as a weight, a level, a volume, etc.

If each container is equipped with an identifier and if a system for locating individual containers is provided (such as triangulation receivers 2'), central computer 3 can also be used for searching for containers. If, for instance, a worker is looking for a container with a given type of nuts, the system can tell him about its present location. Such a localisation system can also be used with containers that are not equipped with a weight detector.

## Claims

1. A storage comprising a plurality of containers (1) characterized in that each of said containers (1) comprises
a contents detector (6) for measuring a parameter depending on an amount of material (7) stored in said container (1) and
a radio transmitter (9) for emitting a signal indicative of said parameter.

2. The storage of claim 1 further comprising a radio receiver (2) for receiving the signals from said radio transmitters (9).

3. The storage of one of the preceding claims, further comprising localization means (2') for determination of the position of individual containers (1).

4. The storage of one of the preceding claims, wherein said transmitter (9) is adapted to emit a signal when said amount changes.

5. The storage of one of the preceding claims, wherein an identifier is attributed to each container (1) and wherein said transmitter (9) is adapted to emit said identifier together with said signal.

6. The storage of one of the preceding claims, wherein said contents detector (6) comprises a weight detector.

7. The storage of one of the preceding claims, wherein said transmitter (9) is adapted to emit a signal when the amount of material in said container (1) is below a given threshold value.

8. The storage of one of the preceding claims, wherein each container (1) comprises a power supply (10).

9. A container for material characterized by
a contents detector (6) mounted to said container for measuring a parameter depending on an amount of material stored in said container (1) and
a radio transmitter (9) mounted to said container (1) for transmitting a signal indicative of said parameter.

10. The container of claim 9 further comprising a bin (5) and a weight detector (6) measuring a weight of said bin.
